# EUROPÄISCHE PATENTSCHRIFT

(11) **EP 3 733 482 B1**
(45) Veröffentlichungstag und Bekanntmachung des Hinweises auf die Patenterteilung: **20.07.2022**
(21) Anmeldenummer: 20172481.2
(22) Anmeldetag: 30.04.2020
(51) Int. Cl.: B62D 7/14, B62D 5/00, B62D 7/15

(54) **LENKANORDNUNG, FAHRZEUG UND VERFAHREN**
STEERING ASSEMBLY, VEHICLE AND METHOD
AGENCEMENT DE DIRECTION, VÉHICULE ET PROCÉDÉ

(30) Priorität: 03.05.2019 DE 102019111427
(43) Veröffentlichungstag der Anmeldung: 04.11.2020
(73) Patentinhaber: ME Mobil-Elektronik GmbH, 74243 Langenbrettach (DE)
(72) Erfinder: Völker, Marco, 68723 Schwetzingen (DE); Sailer, Bernd, 74626 Bretzfeld (DE); Klugesherz, Klaus, 74626 Bretzfeld (DE)
(74) Vertreter: Negendanck, Matthias

(56) Entgegenhaltungen:
- DE-A1- 10 037 829
- DE-T2- 60 303 841

## Beschreibung

Die Erfindung betrifft eine Lenkanordnung zur Lenkung eines Fahrzeugs mit den Merkmalen des Oberbegriffs des Anspruchs 1.

Üblicherweise werden zur Lenkung von Fahrzeugen entweder Vorderachsen und/oder Hinterachsen gelenkt. Neben der mechanischen Lenkung existieren Lösungen, bei denen die Lenkung eine Datenverarbeitung und/oder Sensoren und Aktoren aufweisen. Dabei führt ein Aktor an der Lenkachse den jeweiligen Lenkbefehl aus.

Die Druckschrift DE 36 23 479 C2 beschreibt eine Lenkeinrichtung für mindestens ein Vorder- und ein Hinterrad, umfassend einen Lenkradwinkelfühler und einen Fahrzeuggeschwindigkeitsfühler, wobei mittels mathematischer Operationen ein Sollwert für den Steuerwinkel der Hinterräder bestimmt wird.

Die Druckschrift DE 10 2017 112 183 beschreibt eine Steueranordnung zur Lenkung mindestens einer Hinterachse eines Fahrzeugs. Die Steueranordnung umfasst eine Steuereinrichtung mit einer ersten und einer zweiten Steuereinrichtung, wobei die erste Steuereinrichtung ausgebildet ist, ein erstes Sollwerthinterachsenwinkeldatum auf Basis einer Fahrzeuggeschwindigkeit und einer Vorderachsenlenkwinkelstellung zu bestimmen. Die zweite Steuereinrichtung ist ausgebildet, redundant ein zweites Sollhinterachsenlenkwinkeldatum auf Basis der Fahrzeuggeschwindigkeit und des Vorderachsenlenkwinkeldatums zu bestimmen.

In der Druckschrift DE 100 37 829 A1 ist ein Lenksystem für ein Fahrzeug beschrieben, Das Lenksystem umfasst einer Hydraulikpumpe zur Lenkunterstützung, wobei die Hydraulikpumpe hinsichtlich der Pumpmenge und/oder Pumpdruck steuerbar ist.

Die Druckschrift DE 603 03 829 T2, die den nächstkommenden Stand der Technik bildet, beschreibt eine Lenkvorrichtung, insbesondere für größere Fahrzeuge, bei welchem zwei Motoren durch Aufbringung einer Unterstützungskraft eine Lenkung umsetzen. Die Lenkvorrichtung widmet sich der Problematik, dass es basierend auf der zeitlich Versetztheit im Betrieb zu Variationen kommt und das Lenkverhalten als unangenehm empfunden wird. Hierzu schlägt die Druckschrift vor, basierend auf einer Auswertung von Betriebsparametern die zwei Motoren anzusteuern.

Es ist Aufgabe der Erfindung, eine Lenkanordnung zur Lenkung eines Fahrzeugs bereitzustellen, welche eine sicherere Betriebsweise aufweist. Diese Aufgabe wird durch die Lenkanordnung mit den Merkmalen des Anspruchs 1 gelöst. Ferner wird die Aufgabe durch das Fahrzeug mit den Merkmalen des Anspruchs 13 und durch das Verfahren mit den Merkmalen des Anspruchs 14 gelöst. Bevorzugte und/oder vorteilhafte Ausführungsformen der Erfindung ergeben sich aus den Unteransprüchen, der nachfolgenden Beschreibung sowie den beigefügten Figuren.

Gegenstand der Erfindung ist eine Lenkanordnung zur Lenkung eines Fahrzeugs. Insbesondere bildet und/oder umfasst die Lenkanordnung einen Regelkreis. Die Lenkanordnung ist zur Lenkung einer Vorderachse und/oder einer Hinterachse eines Fahrzeugs ausgebildet. Das Fahrzeug ist insbesondere ein Kraftfahrzeug und im Speziellen ein Sonderfahrzeug. Beispielsweise ist das Fahrzeug ein Bus, ein LKW, ein Flurförderfahrzeug oder ein Panzer. Das Fahrzeug weist insbesondere mindestens zwei Achsen auf, wobei mindestens eine Achse eine gelenkte Achse bildet. Ferner weist das Fahrzeug ein Lenkrad zum Lenken durch einen Fahrer auf.

Die Lenkanordnung weist eine erste Steuereinrichtung und eine zweite Steuereinrichtung auf. Erste Steuereinrichtung und zweite Steuereinrichtung sind beispielsweise als ein Softwaremodul ausgebildet. Ferner kann es vorgesehen sein, dass die erste Steuereinrichtung und die zweite Steuereinrichtung als ein Prozessor oder als eine Rechnereinheit ausgebildet sind. Im Speziellen sind die erste Steuereinrichtung und/oder die zweite Steuereinrichtung als ein Hydraulikmodul oder Pneumatikmodul ausgebildet. Besonders bevorzugt umfasst und/oder bildet die erste und/oder zweite Steuereinrichtung ein bidirektionales hydraulisches Ventil und/oder eine bidirektionale Hydraulikpumpte. Insbesondere sind erste Steuereinrichtung und zweite Steuereinrichtung separate Einrichtungen und/oder Module. Insbesondere arbeiten erste Steuereinrichtung und zweite Steuereinrichtung unabhängig voneinander. Erste Steuereinrichtung und zweite Steuereinrichtung bilden im Speziellen ein redundantes System.

Die Lenkanordnung, die erste Steuereinrichtung und/oder zweite Steuereinrichtung sind insbesondere für einen Fail-Operational-Betrieb und/oder zur Eigenüberwachung ausgebildet. Ferner ist es vorzugsweise vorgesehen, dass die erste Steuereinrichtung und die zweite Steuereinrichtung Fail-Silent ausgebildet sind.

Die erste Steuereinrichtung ist zur Übernahme eines ersten Eingangsdatums des Fahrzeugs ausgebildet. Die Übernahme des ersten Eingangsdatums erfolgt mittels einer Eingangsschnittstelle der Steuereinrichtung. Die Eingangsschnittstelle ist insbesondere eine Datenschnittstelle und kann als eine virtuelle oder reale Schnittstelle ausgebildet sein, beispielsweise als eine Hardwareschnittstelle. Das erste Eingangsdatum ist beispielsweise eine Lenkradwinkelstellung oder ein Einschlagwinkel des Lenkrads. Ferner kann es beispielsweise vorgesehen sein, dass das erste Eingangsdatum eine Vorderachsen- oder eine Hinterachsenwinkelstellung umfasst. Im Speziellen umfasst das erste Eingangsdatum eine Geschwindigkeit des Fahrzeugs. Die erste Steuereinrichtung weist ferner eine Ausgangsschnittstelle zur Ausgabe eines ersten Ausgabedatums auf. Das erste Ausgabedatum ist beispielsweise ein Sollwert für einen Aktor an der Lenkung. Ferner kann das erste Ausgangsdatum ein Lenkwinkel einer Lenkachse sein. Insbesondere bildet das erste Ausgangsdatum einen Sollwert für die Lenkung des Fahrzeugs und/oder einen Sollwert für einen Aktor der Lenkachse. Im Speziellen bildet das erste Ausgangsdatum einen Winkelwert als einen absoluten Winkelwert oder einen Relativwert. Beispielsweise ist die erste Steuereinrichtung ausgebildet, das erste Ausgangsdatum basierend auf dem ersten Eingangsdatum zu bestimmen. Diese Bestimmung erfolgt im Speziellen auf Basis der Ackermann-Gleichung unter Berücksichtigung der Fahrzeuggeschwindigkeit.

Unter einem Datum wird vorzugsweise ein Wert oder ein Wertesatz verstanden, welcher die jeweilige Größe quantifiziert. Insbesondere können statt eines Datums auch Daten verwendet werden, wobei die Erfindung im Speziellen auch auf Eingangsdaten und Ausgangsdaten lesbar sein soll. Es ist möglich, dass das Datum die jeweilige Größe unmittelbar quantifiziert, alternativ ist es möglich, dass das Datum ein Relativwert für die Größe ist. So kann bei einem Winkeldatum der Winkelwert als unmittelbare Quantifizierung angegeben sein, alternativ ist das Winkeldatum ein Wert, der über eine Abbildungsvorschrift in den Winkelwert umgewandelt werden kann.

Die zweite Steuereinrichtung ist ausgebildet, ein zweites Eingangsdatum über eine Eingangsschnittstelle zu übernehmen. Die Eingangsschnittstelle ist eine virtuelle Schnittstelle oder eine Hardwareschnittstelle. Vorzugsweise Ist das zweite Eingangsdatum äquivalent zum ersten Eingangsdatum. Das zweite Eingangsdatum umfasst beispielsweise den Lenkradwinkel und/oder die Lenkradstellung, eine Achsenwinkelstellung und/oder eine Geschwindigkeit des Fahrzeugs. Die zweite Steuereinrichtung weist eine Ausgangsschnittstelle zur Ausgabe eines zweiten Ausgangsdatums auf. Insbesondere ist die zweite Steuereinrichtung ausgebildet, basierend auf dem zweiten Eingangsdatum das zweite Ausgangsdatum zu bestimmen. Insbesondere wird das zweite Ausgangsdatum unabhängig und/oder separat von der Bestimmung des ersten Ausgangsdatums bestimmt. Das zweite Ausgangsdatum ist vorzugsweise äquivalent und/oder ähnlich zum zweiten Ausgangsdatum und beschreibt beispielsweise ebenfalls einen Sollwert für die Lenkachse. Erste Steuereinrichtung und zweite Steuereinrichtung arbeiten im Speziellen redundant und/oder unabhängig. Erste Steuereinrichtung und zweite Steuereinrichtung weisen im Speziellen eine separate Spannungs- und/oder Stromversorgung auf.

Die Lenkanordnung weist eine Lenkachse auf. Die Lenkachse bildet insbesondere eine Fahrzeugachse des Fahrzeugs. Die Lenkachse weist mindestens eine Aktorikeinrichtung zur Lenkwinkeländerung auf. Im Speziellen kann die Aktorikeinrichtung mindestens einen oder mindestens zwei Teilaktoren aufweisen. Mittels der Aktorikeinrichtung ist beispielsweise die Radstellung einstellbar. Die Aktorikeinrichtung ist vorzugsweise eine elektromechanische Aktorikeinrichtung und im Speziellen eine hydraulische Aktorikeinrichtung. Insbesondere sind die Ausgangsschnittstelle der ersten Steuereinrichtung und die Ausgangsschnittstelle der zweiten Steuereinrichtung mit der Aktorikeinrichtung datentechnisch gekoppelt. Mittels der ersten und der zweiten Steuereinrichtungen ist insbesondere die Aktorikeinrichtung ansteuerbar. Beispielsweise kann mittels der Steuereinrichtungen die Radstellung und/oder die Lenkwinkeländerung variiert werden.

Die Aktorikeinrichtung weist zwei unterschiedlichen Funktionalitäten auf. Die Funktionalitäten umfassen eine erste Funktionalität und eine zweite Funktionalität. Mindestens eine der Funktionalitäten ist beispielsweise ausgebildet, eine Radstellungsänderung zu bewirken. Die Funktionalitäten können als aktive Funktionen und/oder Funktionalitäten ausgebildet sein oder passive, beispielsweise ruhende oder inaktive, Funktionalitäten ausgebildet sein. Beispielsweise sind die unterschiedlichen Funktionalitäten unterschiedliche, beispielsweise gegengerichtete, Lenkrichtungen oder Ansteuerung unterschiedlicher Teilaktoren. Beispielsweise ist eine Funktionalität die Ansteuerung eines hydraulischen Zylinders zur Lenkwinkeländerung. Erste Funktionalität und zweite Funktionalität sind vorzugsweise unterschiedlich.

Die erste Steuereinrichtung ist ausgebildet, das erste Ausgangsdatum der ersten Funktionalität oder der zweiten Funktionalität zuzuordnen. Das Zuordnen des Ausgangsdatums kann im Speziellen als ein Steuern der Funktionalität basierend auf dem Ausgangsdatum verstanden werden. Beispielsweise ist die erste Steuereinrichtung ausgebildet die Aktorikeinrichtung zur Durchführung der ersten oder zweiten Funktionalität basierend auf dem ersten Ausgangsdatum anzusteuern.

Die zweite Steuereinrichtung ist ausgebildet, das zweite Ausgangsdatum der Funktionalität zuzuordnen, die nicht von der ersten Steuereinrichtung mit dem ersten Ausgangsdatum angesteuert wird und/oder der nicht das erste Ausgangsdatum zugeordnet wird. Insbesondere wird eine Funktionalität basierend auf dem ersten Ausgangsdatum angesteuert und die andere Funktionalität mit dem zweiten Ausgangsdatum angesteuert. Vorzugsweise kann das Zuordnen eines Ausgangsdatums an eine Funktionalität verstanden werden als das Ansteuern der Funktionalität basierend auf dem Ausgangsdatum. Beispielsweise ist die zweite Steuereinrichtung ausgebildet, die Aktorikeinrichtung zur Durchführung der ersten oder zweiten Funktionalität basierend auf dem zweiten Ausgangsdatum anzusteuern.

Damit wird beispielsweise sichergestellt, dass jede Steuereinrichtung während des Normalbetriebes einer Funktionalität zugeordnet wird und/oder ist. Im Speziellen sind beide Steuereinrichtungen zur Durchführung jeweils einer Funktionalität im Betrieb, sodass beispielsweise dauerhaft die Intaktheit der Steuereinrichtungen geprüft werden kann.

Es ist eine Überlegung der Erfindung, dass die Lenkung des Fahrzeugs mittels zweier Funktionalitäten ansteuerbar ist, wobei insbesondere eine Funktionalität von jeweils einer Steuereinrichtung angesteuert und/oder übernommen wird. Durch die Verteilung der Aufgaben auf zwei Steuereinrichtungen, kann das Ausfallrisiko reduziert werden. Insbesondere wird bei dem Ausfall einer Steuereinrichtung nur eine Funktionalität ausfallen, wobei die andere Funktionalität zum Lenken erhalten bleibt.

Ferner ist es eine Überlegung, dass bei der Diagnose der Intaktheit von Lenkanordnungen und/oder von Steuereinrichtungen in der Lenkanordnung das Problem vorherrscht, dass diese Diagnose nur vernünftig möglich ist, wenn das entsprechende System aktiv Funktionalitäten ausführt, beispielsweise lenkt und gegebenenfalls alle nötigen Teilsysteme ansteuert, sodass im Speziellen auch klemmende Ventile detektierbar sind. Somit gilt, dass eine im Standby befindliche Steuereinrichtung, die keine Funktionalität übernimmt, nicht vollständig diagnostizierbar und/oder überprüfbar wäre. Somit müssen zur fehlerfreien Diagnose und Überprüfung ständig beide Subsysteme und/oder Steuereinrichtungen im Eingriff stehen, um jederzeit über deren Funktionsfähigkeit Bescheid zu wissen. Beispielsweise ergibt sich bei Fahrzeugen, die einen Duoduplexansatz verwenden, die Problematik, dass pro Subsystem und/oder pro Steuereinrichtung ein hydraulischer Aktor und ein Zylinder vorhanden ist, welche jedoch auf lediglich eine gemeinsame Achse wirken, sodass bei einem Falschlenken der Achse nicht direkt ersichtlich ist, welches Subsystem und/oder welche Steuereinrichtung für die Fehlfunktion verantwortlich ist. Bei solchen Duoduplexansätzen ist eine Möglichkeit beim Herausfinden des fehlerhaften Systems, zunächst zufällig ein Subsystem und/oder eine Steuereinrichtung abzuschalten. Bleibt die Fehlfunktion bestehen, so wurde der falsche Kreis abgeschaltet, dieser muss sofort wieder aktiviert werden und der andere Kreis abgeschaltet werden. Es besteht somit eine nur fünfzig prozentige Wahrscheinlichkeit, das richtige Subsystem abzuschalten.

Durch das Aufteilen und/oder Zuordnen der ersten Steuereinrichtung und der zweiten Steuereinrichtung auf zwei unterschiedliche Funktionalitäten kann durch das Überprüfen der jeweiligen Funktionalität direkt herausgefunden werden, welche Steuereinrichtung und/oder welches Subsystem nicht korrekt arbeitet. Als Subsystem wird insbesondere eine Steuereinrichtung mit zugeordneter Funktionalität und/oder zugeordnetem Teilaktor verstanden.

Erfindungsgemäß ist es vorgesehen, dass die erste Steuereinrichtung und die zweite Steuereinrichtung jeweils eine Ausfalldiagnoseeinrichtung aufweisen. Die Ausfalldiagnoseeinrichtung ist und/oder umfasst beispielsweise ein Softwaremodul. Die Ausfalldiagnoseeinrichtung ist jeweils ausgebildet, mindestens eine der zwei Funktionalitäten, die erste und/oder die zweite Funktionalität in der Durchführung zu überwachen. Die Ausfalldiagnoseeinrichtung der jeweiligen Steuereinrichtung überwacht im Speziellen die Funktionalität, der von der jeweiligen Steuereinrichtung auch das Ausgangsdatum zugeordnet ist und/oder wird. Die Ausfalldiagnoseeinrichtung bildet damit insbesondere eine Eigendiagnoseeinrichtung, wobei Eigendiagnose im Speziellen meint, dass zur Diagnose der Fehlerfreiheit einer Steuereinrichtung die der Steuereinrichtung zugeordnete Funktionalität überwacht ist und/oder wird.

Die Durchführung der Überwachung der Funktionalität umfasst beispielsweise eine Bewertung und/oder Überprüfung der Ausgangsdaten und/oder eine Überprüfung der Ausführung der Funktionalität, beispielsweise des Lenkens. Wird eine Funktionalität nicht richtig durchgeführt, so ist die Ausfalldiagnoseeinrichtung ausgebildet, dies als Fehler zu erkennen und/oder als Fehler auszugeben.

Ferner ist die Ausfalldiagnoseeinrichtung ausgebildet, bei Vorliegen eines Fehlers und/oder bei nicht korrekter Durchführung der Funktionalität eine Fehlerlösung einzuleiten. Die Fehlerlösung dient insbesondere der Fehlerbehebung und/oder der Möglichkeit, weiterhin uneingeschränkt das Fahrzeug lenken und/oder betreiben zu können, obwohl eine der beiden Funktionalitäten nicht korrekt ausgeführt und/oder durchgeführt wird. Eine Fehlerlösung ist beispielsweise das Betätigen einer hydraulischen Sperrung oder eines hydraulischen Freischaltens. Die Sperr- und Freischalteventile der Subsysteme sind beispielsweise so ausgeführt, dass bei der Abschaltung einer Magnetspule der Sperr- und/oder Freischalteventile die hydraulische Ansteuerung gesperrt oder freigeschaltet ist, im Speziellen bilden die Sperr- und Freischalteventile Fail-Silent-Sperr- und/oder Freischalteventile. Ferner ist es vorzugsweise vorgesehen, dass beim Ausfall des Sperrventils, der dazu führt, dass das Subsystem nicht mehr gesperrt werden kann, noch immer die Sperrung über ein Proportionalventil möglich ist. Dieser Ausgestaltung der Erfindung liegt die Überlegung zugrunde, eine sicherheitsverbesserte Lenkanordnung dadurch bereitzustellen, dass jederzeit eine volle Diagnostizierbarkeit der Funktion möglich ist.

Optional ist es vorgesehen, dass die Ausfalldiagnoseeinrichtung ausgebildet ist, bei Vorliegen und/oder Detektion eines Fehlers als Fehlerlösung die überwachte und/oder die fehlerhafte Funktionalität zu unterdrücken und/oder abzuschalten. Insbesondere ist die erste Steuereinrichtung und/oder die zweite Steuereinrichtung ausgebildet, bei Vorliegen eines Fehlers sich selbst abzuschalten, wobei die Steuereinrichtungen nicht die jeweils andere Steuereinrichtung abschalten können. Im Speziellen können die Steuereinrichtungen eine Eigendiagnose durchführen.

Besonders bevorzugt ist es, dass die Ausfalldiagnoseeinrichtung ausgebildet ist, bei Vorliegen eines Fehlers, als Fehlerlösung die überwachte und/oder die fehlerhafte Funktionalität durch die andere Funktionalität zu substituieren und/oder zu ersetzen. Insbesondere wird dabei die unterdrückte und/oder abgeschaltete Funktionalität durch die andere Funktionalität substituiert und/oder ersetzt. Insbesondere wird bei Feststellen eines Fehlers von der Ausfalldiagnoseeinrichtung der fehlerhaften Funktionalität das jeweils andere Ausgangsdatum zugeordnet und/oder die Zuordnung des Ausgangsdaten an die Funktionalität wird getauscht. Zum Beispiel wird von der Ausfalldiagnoseeinrichtung der ersten Steuereinrichtung festgestellt, dass die erste Funktionalität nicht korrekt durchgeführt wird und ein Fehler vorliegt, wobei zur Fehlerlösung dann der ersten Funktionalität auch das zweite Ausgangsdatum zugeordnet wird. Beispielsweise wird von der Ausfalldiagnoseeinrichtung der ersten Steuereinrichtung festgestellt, dass die erste Funktionalität nicht korrekt durchgeführt wird und ein Fehler vorliegt, wobei die erste Funktionalität dann beispielsweise abgeschaltet wird und/oder unterdrückt wird und die erste Funktionalität durch die zweite Funktionalität ersetzt und/oder ergänzt wird. Insbesondere kann es vorgesehen sein, dass bei Vorliegen des Fehlers die Ausfalldiagnoseeinrichtung ausgebildet ist, die andere Funktionalität zu erweitern, beispielsweise um Funktionen, welche die fehlerhafte Funktionalität durchführte. Die von der abgeschalteten und/oder fehlerhaften Funktionalität übernommenen Funktionen und/oder Aufgaben können so von der anderen Funktionalität übernommen werden. Dieser Ausgestaltung liegt die Überlegung zugrunde, eine sicherheitstechnisch verbesserte Lenkanordnung bereitzustellen, indem die Funktionalitäten sich ergänzen und/oder gegenseitig ergänzen können, beispielsweise durch eine Erweiterung.

Besonders bevorzugt ist es vorgesehen, dass die Ausfalldiagnoseeinrichtung ausgebildet ist, bei Vorliegen des Fehlers als Fehlerlösung der überwachten und/oder der fehlerhaften Funktion als Ausgangsdatum das Ausgangsdatum der anderen Funktionalität zuzuordnen. Beispielsweise wurde festgestellt, dass die fehlerhafte Funktionalität die erste Funktionalität ist, wobei die erste Funktionalität von dem ersten Ausgangsdatum der ersten Steuereinrichtung angesteuert und/oder diesem zugeordnet ist, wobei die Lenksteuerung die erste Funktionalität zur Fehlerbehebung mit dem zweiten Ausgangsdatum verbindet und das zweite Ausgangsdatum der ersten Funktionalität zuordnet. Es erfolgt damit insbesondere eine doppelte Zuordnung eines Ausgangsdatums an die beiden Funktionalitäten. Dieser Ausgestaltung liegt die Überlegung zugrunde, eine sicherheitstechnisch verbesserte Lenkanordnung bereitzustellen, indem die Ausgangsdaten identisch und/oder analog ausgebildet werden, sodass eine Steuereinrichtung durch die andere Steuereinrichtung, insbesondere deren Ausgangsdaten, ersetzbar sind. Insbesondere ist es vorgesehen, dass die erste Steuereinrichtung und die zweite Steuereinrichtung miteinander kommunizieren können, beispielsweise, indem sie datentechnisch miteinander verbunden sind. Über die datentechnische Verbindung kann beispielsweise ein Zustand und/oder ein Fehler der Steuereinrichtung gegenseitig übermittelt werden und/oder die Steuereinrichtung können sich gegenseitig abstimmen.

Insbesondere sind die erste und die zweite Funktionalität voneinander unabhängig und/oder beeinflussen sich nicht gegenseitig. Im Speziellen sind die erste und die zweite Funktionalität gegengerichtet und/oder gegensätzlich ausgebildet. Besonders bevorzugt ist es, dass die erste Funktionalität als ein Lenken in eine Lenkrichtung ausgebildet ist und die zweite Funktionalität als ein Lenken in eine Gegenrichtung zur Lenkrichtung ausgebildet ist. Beispielsweise ist die erste Funktionalität ein Lenken nach links, wobei die zweite Funktionalität als ein Lenken nach rechts ausgebildet ist. Insbesondere wird das Lenken in die Lenkrichtung beispielsweise von der ersten Steuereinrichtung ausgebildet und/oder mit Ausgangsdaten versorgt, wobei das Lenken in die Gegenrichtung insbesondere mit Ausgangsdaten der zweiten Steuereinrichtung versorgt wird. Insbesondere kann die erste Funktionalität um ein Lenken in Gegenrichtung erweitert werden, wobei ferner die zweite Funktionalität um die Funktion in ein Lenken in Lenkrichtung erweiterbar ist. Dieser Ausgestaltung liegt die Überlegung zugrunde, dass, wenn ein Teilaktor in eine Richtung korrekt lenken kann, aufgrund einer Analyse der Ausfallmöglichkeiten davon ausgegangen werden kann, dass auch das Lenken in die andere Richtung funktionieren wird. Bei einer fehlerhaften Lenkung ist aufgrund der getrennten Lenkrichtungen sofort klar, welche Steuereinrichtung und/oder welches Subsystem den Fehler verursacht hat. Dieser kann sofort abgeschaltet werden und die andere Steuereinrichtung und/oder das andere Subsystem, beispielsweise der andere Teilaktor, übernimmt die volle Lenkfunktion. Ferner ist einfach zu entscheiden, dass, wenn die Lenkachse nicht in eine Richtung lenkt, welches Subsystem und/oder welche Steuereinrichtung den Fehler verursacht hat. Das bis dahin lenkfähige Subsystem und/oder Steuereinrichtung wird daraufhin beispielsweise die Lenkung in beide Richtung übernehmen, wobei sich das fehlerhafte Subsystem insbesondere abschalten würde. Wenn eine Lenkachse in eine Richtung ungewollt lenkt, zum Beispiel durch das Klemmen eines Ventilschiebers, kann ebenfalls unmittelbar diagnostiziert werden, welches Subsystem und/oder welche Steuereinrichtung die Ursache für den Fehler verursacht und welche Fehlerlösungen einzuleiten sind.

Optional ist es vorgesehen, dass die erste Funktionalität als ein Lenken ausgebildet ist und die zweite Funktionalität als ein Standby-Modus ausgebildet ist. Ferner kann allgemeiner vorgesehen sein, dass eine der beiden Funktionalitäten einen Standby-Modus beschreibt. Dieser Ausgestaltung liegt die Überlegung zugrunde, dass die erste Funktionalität ständig vollkommen durchgeführt wird und beispielsweise alle Ventile angesteuert werden, wobei die zweite Funktion nur als ein Standby-Betrieb vorhanden ist. Insbesondere ist bei dieser Ausgestaltung zu einem beliebigen Zeitpunkt jeweils ein Subsystem für die volle Lenkung zuständig, insbesondere ist eine Steuereinrichtung für die volle Durchführung der Lenkung zuständig, wobei das andere Subsystem und/oder die andere Steuereinrichtung im Standby-Modus ist. Bei einer fehlerhaften Lenkbewegung ist damit sofort klar, welches Subsystem den Fehler verursacht hat, da zu jedem Zeitpunkt nur ein Subsystem aktiv für die Lenkung zuständig ist. Das Subsystem, das den Fehler derzeit verursacht, kann somit sofort abgeschaltet werden und das andere Subsystem und/oder die andere Steuereinrichtung übernimmt die volle Lenkung und/oder aktive Funktion des Lenkens.

Besonders bevorzugt ist es, dass die Steuereinrichtungen und/oder die Ausfalldiagnoseeinrichtungen ausgebildet sind, regelmäßig die Zuordnung der Funktionalitäten zu den Ausgangsdaten zu tauschen, zu wechseln und/oder zu permutieren. Beispielsweise erfolgt der Wechsel dieser Zuordnung nach jedem Neustart der Lenksteuerung und/oder des Fahrzeugs. Alternativ kann vorgesehen sein, dass die Zuordnung zyklisch gewechselt wird, beispielsweise jeweils nach einer Stunde. Beispielsweise wird regelmäßig und/oder zyklisch die Zuordnung von erster Steuereinrichtung zum Lenken in Lenkrichtung und zweiter Steuereinrichtung zum Lenken in Gegenlenkrichtung gewechselt. Alternativ ist es vorgesehen, dass die Zuordnung von Ausgangsdatum zu Standby-Modus und Funktionalität Lenken gewechselt wird. Dieser Ausgestaltung liegt die Überlegung zugrunde, dass durch das regelmäßige Verwenden des Subsystems und/oder der Steuereinrichtung, durch das Wechseln von einer korrekten Funktion der beiden Subsysteme und/oder Steuereinrichtungen ausgegangen werden kann.

Vorzugsweise weist die Lenkanordnung eine Standlenkungssteuereinheit auf, wobei die Standlenkungssteuereinheit ein Software- oder Hardwaremodul bilden kann. Der Standlenkungssteuereinheit ist eine Fahrzeuggeschwindigkeit des Fahrzeugs bereitgestellt, insbesondere eine aktuelle Fahrzeuggeschwindigkeit, eine geschätzte, eine gemessene oder eine vorhergesagte Fahrzeuggeschwindigkeit. Die Standlenkungssteuereinheit ist ausgebildet, bei einer Fahrzeuggeschwindigkeit kleiner als eine Mindestbewegungsgeschwindigkeit die bidirektionalen Pumpen der ersten und der zweiten Steuereinrichtung gleichzeitig zur Lenkung und/oder zur Ansteuerung der ersten und zweiten Funktionalität einzusetzen. Die Standlenkungssteuereinheit ist ausgebildet, bei einer Fahrzeuggeschwindigkeit größer als die Mindestbewegungsgeschwindigkeit nur eine der bidirektionalen Pumpen der ersten und zweiten Steuereinrichtung zur Lenkung und/oder zur Ansteuerung der ersten und/oder zweiten Funktionalität einzusetzen, wobei die andere Pumpe nicht zur Funktionalitätsübernahme beiträgt und/oder im Stand-by-modus ist. Die Mindestbewegungsgeschwindigkeit beträgt beispielsweise 15 km/h, insbesondere 10 km/h, vorzugsweise 5 km/h und im Speziellen 2 km/h. Dieser Ausgestaltung liegt die Überlegung zu Grunde, dass bei einer Lenkung des Fahrzeugs im Stand bzw. bei sehr kleinen Geschwindigkeiten große Kräfte benötigt werden und bei Lenkung mit nur einer Pumpe sehr große Pumpen zur Erreichung der Kräfte benötigt würden. Aufgrund der Redundanz der Steuereinrichtungen und damit der bidirektionalen Pumpen, können kleinere Pumpen verwendet werden, die bei einer Lenkung im Stand und/oder geringen Geschwindigkeiten gemeinsam die Lenkung bewirken und so die benötigte Kraft von beiden Pumpen zusammen bewirkt wird statt von einer. Im Normalbetrieb bzw. bei Fahrt des Fahrzeugs kann wieder eine der beiden Pumpen die Lenkung aktiv übernehmen.

Insbesondere ist es vorgesehen, dass die Lenkachse als eine Hinterachse des Fahrzeugs ausgebildet ist. Insbesondere bildet die Lenkanordnung dabei eine Hilfslenkanordnung. In einer üblichen Bauweise haben Fahrzeuge eine gelenkte Vorderachse und eine Hinterachse, welche keine Lenkfunktion übernimmt. Jedoch finden bei Fahrzeugen im Sondermaschinenbau und bei Fahrzeugen höherer Geschwindigkeit Lenkungen der Hinterachse Anwendung. Bei Hinterachslenksystemen wird beispielsweise an der Vorderachse ein Lenkwinkelsensor eingesetzt, welcher den Lenkwinkel der Vorderachse misst, wobei der Lenkwinkel der Vorderachse beispielsweise das erste Eingangsdatum und das zweite Eingangsdatum bildet. Aus dem Lenkwinkel der Vorderachse wird vorzugsweise ein Lenksollwert der Hinterachse berechnet, welcher dann eingestellt wird. Eine solche Lenkanordnung bildet insbesondere ein Auxiliary-Steering-Equipment. Die Lenkung der Hinterachse und/oder die Lenkachse bilden dabei eine Nachlauf- oder eine Vorlaufachse.

Besonders bevorzugt ist es, dass die Lenkanordnung eine Steer-by-Wire-Anordnung bildet. Die Steer-by-Wire-Anordnung bildet eine Lenkanordnung, bei welcher insbesondere der Lenkbefehl von einem Sensor, im Speziellen im Lenkrad oder einer Vorderachse, ausschließlich elektrisch zum Aktor und/oder der Aktorikeinrichtung, welche den Lenkbefehl ausführt, weitergeleitet wird. Vorzugsweise existiert keine mechanische Wirkverbindung zwischen Lenkrad und gelenkten Rädern.

Eine Ausgestaltung der Erfindung sieht vor, dass das erste Eingangsdatum und das zweite Eingangsdatum einen Lenkradeinschlag und/oder einen Lenkwinkel umfasst, wobei die ersten Ausgangsdaten Informationen zur Lenkwinkeländerung nach links und nach rechts umfassen, wobei die zweiten Ausgangsdaten ebenfalls Informationen zur Lenkwinkeländerung nach links und nach rechts umfassen, wobei die erste Funktionalität eine Lenkwinkeländerung nach rechts bildet und die zweite Funktionalität eine Lenkwinkeländerung nach links bildet, wobei die Steuereinrichtungen ausgebildet sind, der ersten Funktionalität und/oder der Lenkwinkeländerung nach rechts das erste Ausgangsdatum zuzuordnen und der zweiten Funktonalität und/oder der Lenkwinkeländerung nach links das zweiten Ausgangsdatum zuzuordnen. Insbesondere kann die erste und/oder zweite Steuereinrichtung ausgebildet sein, die erste Funktionalität und/oder die Aktorikeinrichtung zur Durchführung der ersten Funktonalität basierend auf den ersten Ausgangsdaten anzusteuern. Ferner kann die Lenksteuerung ausgebildet sein, die zweite Funktionalität und/oder die Aktorikeinrichtung zur Durchführung der zweiten Funktonalität basierend auf den zweiten Ausgangsdaten anzusteuern. Im Speziellen ist die erste und/oder zweite Steuereinrichtung ausgebildet nach einem Neustart des Fahrzeugs der zweiten Funktionalität das erste Ausgangsdatum zuzuordnen und der ersten Funktionalität das zweite Ausgangsdatum zuzuordnen.

Im Speziellen kann es vorgesehen sein, dass das erste Eingangsdatum und das zweite Eingangsdatum einen Lenkradeinschlag und/oder einen Lenkwinkel umfasst, wobei die ersten Ausgangsdaten Informationen zur Lenkwinkeländerung nach links und nach rechts umfassen, wobei die zweiten Ausgangsdaten ebenfalls Informationen zur Lenkwinkeländerung nach links und nach rechts umfassen, wobei die erste Funktionalität eine Lenkwinkeländerung nach links und nach rechts bildet, wobei die zweite Funktionalität ein Nichtstun bildet, wobei die erste und/oder zweite Steuereinrichtung ausgebildet ist, der ersten Funktionalität das erste Ausgangsdatum zuzuordnen und der zweiten Funktonalität das zweiten Ausgangsdatum zuzuordnen, die Steuereinrichtungen ausgebildet sind, sind nach einem Neustart des Fahrzeugs der ersten Funktionalität das zweite Ausgangsdatum zuzuordnen und der zweiten Funktionalität das erste Ausgangsdatum zuzuordnen. Dieser Ausgestaltung liegt die Überlegung zugrunde, dass jeweils eine der Steuereinrichtungen das gesamte Lenken nach links und nach rechts übernimmt, wobei die andere Steuereinrichtung simultan Ausgangsdaten bestimmt und bei Fehlerhaftigkeit der lenkenden Steuereinrichtung sofort einspringen kann. Durch das Wechseln der lenkenden Steuereinrichtungen nach einem Neustart kann gewährleistet werden, dass regelmäßig erste und zweite Steuereinrichtung im Betrieb sind und überprüfbar sind.

Einen weiteren Gegenstand der Erfindung bildet ein Fahrzeug. Das Fahrzeug umfasst mindestens eine Lenkanordnung wie vorher beschrieben. Das Fahrzeug bildet beispielsweise ein Kraftfahrzeug und im Speziellen bildet das Fahrzeug ein Sonderfahrzeug wie beispielsweise ein Flurförderfahrzeug, einen Kran oder einen Bus. Einen weiteren Gegenstand der Erfindung bildet ein Verfahren zur Lenkung eines Fahrzeugs. Insbesondere ist das Verfahren zur Durchführung mit der Lenkanordnung ausgebildet. Bei dem Verfahren wird mit einer ersten Steuereinrichtung ein Ausgangsdatum basierend auf einem ersten Eingangsdatum bestimmt. Mit einer zweiten Steuereinrichtung wird ein zweites Ausgangsdatum basierend auf einem zweiten Eingangsdatum bestimmt. Zweites Eingangsdatum und erstes Eingangsdatum können insbesondere identisch sein. Vorzugsweise bilden und/oder beschreiben erstes Ausgangsdatum und zweites Ausgangsdatum die gleiche Größe. Eine Lenkachse wird basierend auf zwei Funktionalitäten gelenkt. Einer Funktionalität wird das erste Ausgangsdatum zugeordnet, wobei der anderen Funktionalität das andere Ausgangsdatum zugeordnet wird. Insbesondere kann es vorgesehen sein, dass die Durchführung der ersten Funktionalität und der zweiten Funktionalität überprüft und/oder überwacht werden, wobei durch die Überprüfung und/oder Überwachung der Funktionalitäten auf die Funktionsfähigkeit und/oder Funktionstüchtigkeit der beiden Steuereinrichtungen geschlossen werden kann und gegebenenfalls eine Fehlerlösung eingeleitet wird.

Weitere Vorteile, Wirkungen und Ausgestaltungen ergeben sich aus den beigefügten Figuren und deren Beschreibung. Dabei zeigt:
Figur 1 eine schematische Blockdarstellung eines Fahrzeugs als ein Ausführungsbeispiel.
Figur 2 schematisch ein erstes Ausführungsbeispiel einer Lenkanordnung;
Figur 3 ein weiteres Ausführungsbeispiel der Lenkanordnung;
Figur 4 ein drittes Ausführungsbeispiel der Lenkanordnung
Figur 5 ein weiteres Ausführungsbeispiel der Lenkanordnung;
Figur 6 ein weiteres Ausführungsbeispiel der Lenkanordnung.

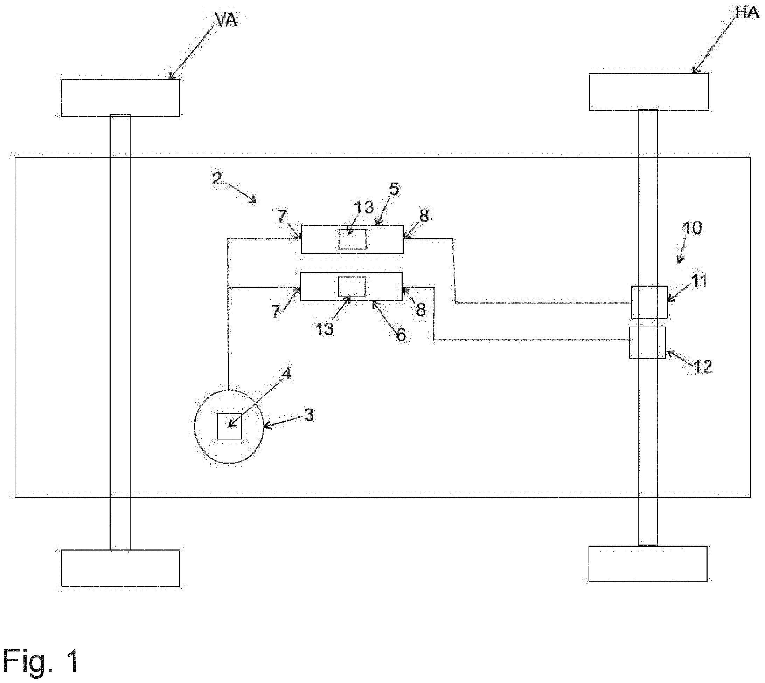

Figur 1 zeigt schematisch eine Blockdarstellung eines Fahrzeugs mit einer Lenkanordnung 2. Das Fahrzeug ist ein Sonderfahrzeug und im Speziellen ein Flurförderfahreug oder ein Bus. Das Fahrzeug weist eine Vorderachse VA und eine Hinterachse HA auf. Die Vorderachse VA ist eine lenkbare Vorderachse, wobei die Hinterachse HA ebenfalls lenkbar ist und beispielsweise eine nachlaufende Hinterachse bildet. Das Fahrzeug weist ein Lenkrad 3 auf. Mittels des Lenkrads 3 kann ein Fahrer das Fahrzeug lenken und einen Lenkwinkel einstellen. Das Lenkrad 3 ist dabei beispielsweise mechanisch, elektrisch und/oder hydraulisch mit der Vorderachse VA zum Einstellen eines Lenkwinkels gekoppelt.

Die Lenkanordnung 2 hat die Funktion, einen Hinterachslenkwinkel der Hinterachse HA einzustellen, derart, dass diese der Vorderachse VA nachgeführt wird und ein durch das Lenkrad eingegebener Lenkwunsch des Fahrers vom Fahrzeug umgesetzt wird.

Das Lenkrad 3 weist einen Sensor 4 auf. Der Sensor 4 bestimmt den aktuellen Lenkwinkel und/oder Einschlagwinkel des Lenkrads. Der Sensor 4 ist zur Bereitstellung des Lenkradwinkels als Eingangsdatum ausgebildet.

Die Lenkanordnung 2 weist eine erste Steuereinrichtung 5 mit einer Eingangsschnittstelle auf und weist eine zweite Steuereinrichtung 6 mit einer zweiten Eingangsschnittstelle auf. Der Sensor 4 ist datentechnisch mit der ersten Steuereinrichtung 5 und der zweiten Steuereinrichtung 6 verbunden. Insbesondere wird der Lenkwinkel als Eingangsdatum der ersten Steuereinrichtung 5 und der zweiten Steuereinrichtung 6 über die jeweilige Eingangsschnittstelle 7 bereitgestellt. Die erste Steuereinrichtung 5 erhält als Eingangsdaten erste Eingangsdaten bereitgestellt, wobei die zweite Steuereinrichtung 6 zweite Eingangsdaten bereitgestellt bekommt. Erstes Eingangsdatum und/oder erste Eingangsdaten und zweite Eingangsdaten und/oder zweites Eingangsdatum sind vorzugsweise identisch und werden von dem Lenkradwinkel gebildet.

Erste Steuereinrichtung 5 und zweite Steuereinrichtung 6 sind als separate Einrichtungen ausgebildet, beispielsweise als separate Softwaremodule und/oder Hydraulikmodule. Die erste Steuereinrichtung 5 ist ausgebildet, basierend auf den ersten Eingangsdaten erste Ausgangsdaten zu bestimmen, wobei diese ersten Ausgangsdaten über die Ausgangsschnittstelle 8 der ersten Steuereinrichtung 5 nach extern bereitgestellt werden. Die zweite Steuereinrichtung 6 ist ausgebildet, basierend auf den zweiten Eingangsdaten zweite Ausgangsdaten zu bestimmen, welche über die Ausgangsschnittstelle 8 der zweiten Steuereinrichtung 6 nach extern bereitgestellt werden. Die ersten Ausgangsdaten und die zweiten Ausgangsdaten haben vorzugsweise das gleiche Format und/oder umfassen eine selbe Information. Im Speziellen sind die ersten Ausgangsdaten und/oder die zweiten Ausgangsdaten als ein Hinterachslenkwinkel ausgebildet.

Die Hinterachse HA umfasst eine Aktorikeinrichtung 10. Die Aktorikeinrichtung 10 weist einen ersten Teilaktor 11 und einen weiten Teilaktor 12 auf. In diesem Ausführungsbeispiel bildet die Hinterachse HA die Lenkachse. Die Hinterachse HA ist mittels der Aktorikeinrichtung 10 ansteuerbar. Die Aktorikeinrichtung 10 weist dabei zwei Funktionalitäten auf 16, 17. Die unterschiedlichen Funktionalitäten 16, 17 werden jeweils von einem Teilaktor 11, 12 übernommen. Beispielsweise ist der erste Teilaktor 11 ausgebildet, die erste Funktionalität 16 zu übernehmen, wobei der zweite Teilaktor 12 ausgebildet ist, die zweite Funktionalität 17 zu übernehmen. Beispielsweise ist die erste Funktionalität 16 ein Lenken nach links, wobei die zweite Funktionalität 17 ein Lenken nach rechts darstellt. Ferner ist es aber vorgesehen, dass jeder Teilaktor 11, 12 beide Funktionalitäten 16, 17 übernehmen könnte und das Lenken der Hinterachse HA auch mit nur einem Teilaktor und/oder einer Funktionalität 16, 17 möglich wäre.

Die Ausgangsschnittstellen 8 der ersten Steuereinrichtung 5 und der zweiten Steuereinrichtung 6 sind jeweils mit der Aktorikeinrichtung 10 verbunden, um diese mittels der Ausgangsdaten steuern zu können. Die erste Steuereinrichtung 5 und die zweite Steuereinrichtung 6 umfassen jeweils eine Ausfalldiagnoseeinrichtung 13.

Die Steuereinrichtungen 5, 6 sind ausgebildet, den ersten Teilaktor 11 basierend auf den ersten Ausgangsdaten anzusteuern und den zweiten Teilaktor 12 basierend auf den zweiten Ausgangsdaten anzusteuern. Insbesondere wird eine der Funktionalitäten 16, 17 von den ersten Ausgangsdaten angesteuert und die andere Funktionalität 16, 17 mit zweiten Ausgangsdaten angesteuert.

Die Steuereinrichtungen 5,6 sind ausgebildet, die Zuordnung der ersten und zweiten Ausgangsdaten zu den jeweiligen Teilaktoren 11, 12 und/oder Funktionalitäten 16, 17 regelmäßig zu verändern und/oder durchzutauschen. Beispielsweise wird dem ersten Teilakator 11 wechselnd das erste Ausgangsdatum und das zweite Ausgangsdatum zugeordnet, wobei der Wechsel beispielsweise nach jedem Neustart des Fahrzeugs erfolgt.

Die Steuereinrichtungen 5, 6 weisen jeweils eine eine Ausfalldiagnoseeinrichtung 13 auf. Die Ausfalldiagnoseeinrichtung 13 sind ausgebildet, jeweils die Funktionalität zu überwachen, der ihre Steuereinrichtung 5, 6 jeweils das Ausgangdatum zuordnet. Beispielsweise wird dazu die Durchführung der Funktionalitäten durch den ersten Teilaktor 11 und/oder zweiten Teilaktor 12 überwacht. Beispielsweise kann die Ausfalldiagnoseeinrichtung 13 feststellen, wenn die Funktion eines Teilaktors 11,12 nicht richtig durchgeführt wird, beispielsweise, dass das Fahrzeug und/oder die Hinterachse HA nicht korrekt in eine Richtung nachlenkt und/oder lenkt. Die Ausfalldiagnoseeinrichtung 13 ist ferner ausgebildet, bei der Detektion eines Fehlers eine Fehlerlösung einzuleiten. Beispielsweise sieht die Fehlerlösung vor, dass die defekte und/oder fehlerhafte Funktionalität abgeschaltet wird und/oder dass der Teilaktor 11, 12, welcher nicht korrekt arbeitet, abgeschaltet oder freigeschaltet wird. Ferner kann die Ausfalldiagnoseeinrichtung 13 die zu der fehlerhaften Funktionalität gehörende Steuereinrichtung 5, 6 abschalten. Schaltet die Ausfalldiagnoseeinrichtung 13 eine insbesondere ihre, Steuereinrichtung 5, 6, eine Funktionalität und/oder einen Teilaktor 11, 12 ab, so ist es ferner möglich dass die andere Ausfalldiagnoseeinrichtung 13 ausgebildet ist, den verbleibenden Teilaktor 12 anzusteuern, und die andere Funktionalität mit zu übernehmen. Wird beispielsweise der Teilaktor 11 abgeschaltet, der das Lenken nach links übernimmt, so wird dem zweiten Teilaktor 12, der eigentlich für das Lenken nach rechts zuständig ist, die Aufgabe zum Lenken nach links weiter übergeben. Der zweite Teilaktor 12 führt dann sowohl das Lenken nach links als auch nach rechts durch. Die Ansteuerung der Hinterachse HA über das Lenkrad 3 erfolgt mittels der Lenkanordnung in einem Steer-by-Wire-Verfahren.

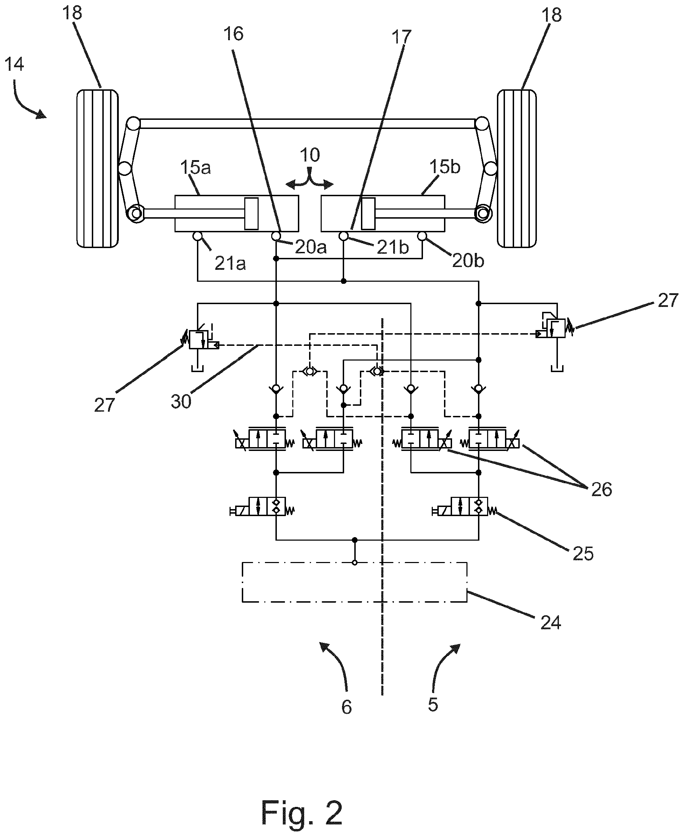

Figur 2 zeigt eine Lenkanordnung 2 mit einer ersten Steuereinrichtung 5 und einer zweiten Steuereinrichtung 6. Die erste Steuereinrichtung 5 und die zweite Steuereinrichtung 6 sind als zwei systemische Zweige ausgebildet, welche insbesondere gleichwertige Aufgaben, beispielsweise Lenkung, übernehmen können.

Die erste Steuereinrichtung 5 und die zweite Steuereinrichtung 6 umfassen jeweils eine hydraulische Schaltung, welche der Ansteuerung der Lenkung dient und/oder dienen kann.

Die Lenkanordnung 2 umfasst eine Lenkachse 14 mit einer Aktorikeinrichtung 10, welche die hydraulischen Zylinder 15a und 15b umfasst. Die hydraulischen Zylinder 15a, 15b und insbesondere die Aktorikeinrichtung 10 weist eine erste Funktionalität 16 und eine zweite Funktionalität 17 auf. Die erste Funktionalität 16 ist hierbei als ein Lenken der Räder 18 nach rechts ausgebildet, wobei die zweite Funktionalität 17 als ein Lenken der Räder 18 nach links ausgebildet ist. Zur Ansteuerung der ersten und zweiten Funktionalität 16, 17 weist jeder hydraulische Zylinder 15a, 15b Eingänge 20a, 20b, 21a, 21b auf. Die Eingänge 20a, 20b, 21a und 21b sind jeweils hydraulisch mit der Steuereinrichtung 5 beziehungsweise 6 verbunden.

Die Lenkanordnung 2 weist eine Versorgungseinrichtung 24 auf, welche zur hydraulischen und/oder Druckbeaufschlagung der weiteren Module ausgebildet ist. Die Versorgungseinrichtung 24 ist drucktechnisch und/oder hydraulisch mit den nachfolgenden Komponenten der Steuereinrichtungen 5 und 6 sowie der Aktorikeinrichtung 10 verbunden. Die Versorgungseinrichtung kann dabei so ausgebildet sein, dass die beiden Steuereinrichtungen (5 und 6) gemeinsam oder separat versorgt werden. Die Steuereinrichtungen 5 und 6 sind ausgebildet, je nach Lenkwunsch und/oder basierend auf Eingangsdaten die hydraulischen Zylinder 15a und 15b so mit Druck und/oder Hydraulik zu versorgen, dass der gewünschte Lenkeinschlag erzielt wird.

Die Steuereinrichtung 5 ist im Wesentlichen identisch zur Steuereinrichtung 6 ausgebildet, wobei sich die Komponenten insbesondere in ihrer Anordnung und/oder Verschaltung entsprechen, sodass die Beschreibung der ersten Steuereinrichtung 5 analog auf die zweite Steuereinrichtung 6 anwendbar ist.

Die Steuereinrichtung 5 weist ausgehend von der Versorgungseinrichtung 24 in Richtung der Aktorikeinrichtung 10 als erstes Element ein Sperrventil 25 auf. Das Sperrventil 25 ist ansteuerbar, insbesondere von einer elektronischen Steuereinrichtung. Das Sperrventil 25 kann den hydraulischen Druck in Richtung der Aktorikeinrichtung 10 freischalten oder als Sperrventil fungieren. Bei einem Durchschalten und/oder Beaufschlagen mit Druck der folgenden Elemente ist die Steuereinrichtung 5 als aktiv anzusehen und kann insbesondere die Räder 18 lenken. Bei einem Sperren durch dieses Ventil ist die Steuereinrichtung 5 als inaktiv anzusehen und übernimmt keine Lenk- und/oder anderen Funktionalitäten der Aktorikeinrichtung 10. Dieser Zweig ist dann als passiv und/oder inaktiv gewertet. Dies ist beispielsweise der Fall, wenn von der Ausfalldiagnoseeinrichtung 13 festgestellt wurde, dass ein Fehler vorliegt und dieser Zweig abzuschalten ist. Bei einem Abschalten dieses Zweiges übernimmt der andere Zweig, hier beispielsweise mittels der Steuereinrichtung 6, beide Funktionalitäten 16, 17, die erste und die zweite Funktionalität 16, 17.

Nachfolgend nach dem Sperrventil 25 spaltet sich der hydraulische Pfad auf, wobei parallele Pfade mit jeweils einem 2/2-Wegeventil 26 versehen sind. Die Ventile 26 können dabei als Sitzventil oder Schieberventil ausgeführt sein und proportional ansteuerbar. Mittels dieser Ventile 26 sind die parallelen Zweige betreibbar, beispielsweise durch Durchschalten der Hydraulik oder absperrbar, sodass beispielsweise nur einer der Zweige aktiv und der andere inaktiv ist. Die Zweige sind nachfolgend nach den Ventilen 26 jeweils mit beiden hydraulischen Zylindern 15a und 15b verbunden, wobei die Verbindung so erfolgt, dass ein Zweig jeweils mit Eingängen der Zylinder 15a, 15b so verbunden ist, dass die gleiche Funktionalität angesteuert wird. Beispielsweise ist der erste Ausgang mit den Eingängen 20a und 20b verbunden, sodass hier die erste Funktionalität 16 ansteuerbar ist, wobei der andere Ausgang des parallelen Zweiges mit den Eingängen 21a und 21b verbunden ist, sodass hiermit die zweiten Funktionalitäten ansteuerbar sind. Die Ventile 26 sind ebenfalls ansteuerbar und/oder regelbar, beispielsweise ebenfalls durch die Ausfalldiagnoseeinrichtung 13.

Ferner umfasst die Lenkanordnung 2 und insbesondere die Steuereinrichtungen 5 und 6 zwei Ventile 27, welche mit den hydraulischen Leitungen und/oder Zweigen so verbunden sind, dass ein Ventil 27 Verbindung zu den Eingängen 20a und 20b hat, welche die erste Funktionalität 16 regeln und das andere Ventil 27 mit den Eingängen 21a und 21b, welche die zweite Funktionalität 17 regeln. Die Ventile 27 sind ausgebildet, eine Verbindung zum Tank zu öffnen und/oder zu schließen, sodass ein Druckausgleich und/oder die Steuerung beziehungsweise das Betreiben der hydraulischen Zylinder 15a, 15b möglich ist. Die Ansteuerung und/oder Regelung dieser Ventile 27 erfolgt mittels der hydraulischen Schaltung, welche sicherstellt, dass jeweils ein Druckausgleich bei entsprechender Beschaltung erreicht wird.

Die Überwachung der richtigen Durchführung der Funktionalitäten 16, 17, beispielsweise des korrekten Lenkens, erfolgt insbesondere mit einer Sensorik, die die Fahrspurüberwachung ermöglicht und/oder eine direkte Überwachung der Bewegung der hydraulischen Zylinder 15a, 15b. Wird mittels des Sensors und/oder nachfolgender, insbesondere digitaler und/oder elektrischer, Auswertung festgestellt, dass eine Funktionalität 16, 17 nicht korrekt ausgeführt wird, kann das Zuordnen der Funktionalitäten 16, 17 der Steuereinrichtungen 5 und 6 von der Ausfalldiagnoseeinheit 13 so korrigiert werden, dass beispielsweise die Ventile 25, 26 entsprechend angesteuert, geschalten und/oder geregelt werden. Dies erfolgt beispielsweise elektronisch, magnetisch oder pneumatisch.

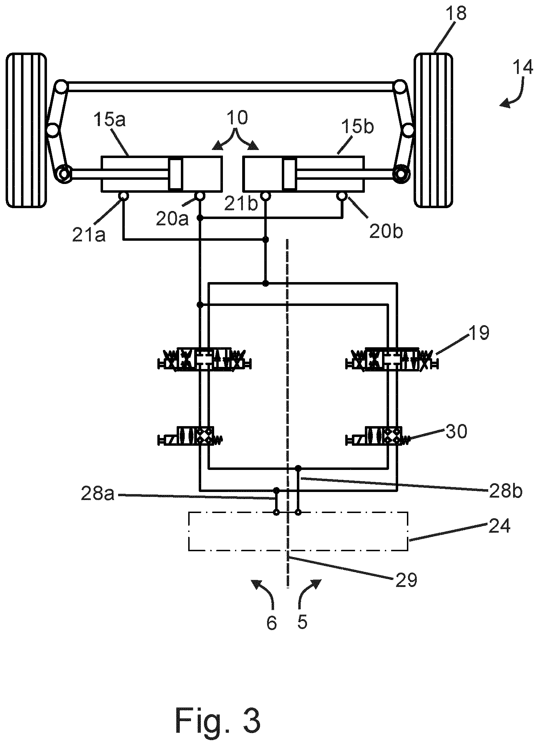

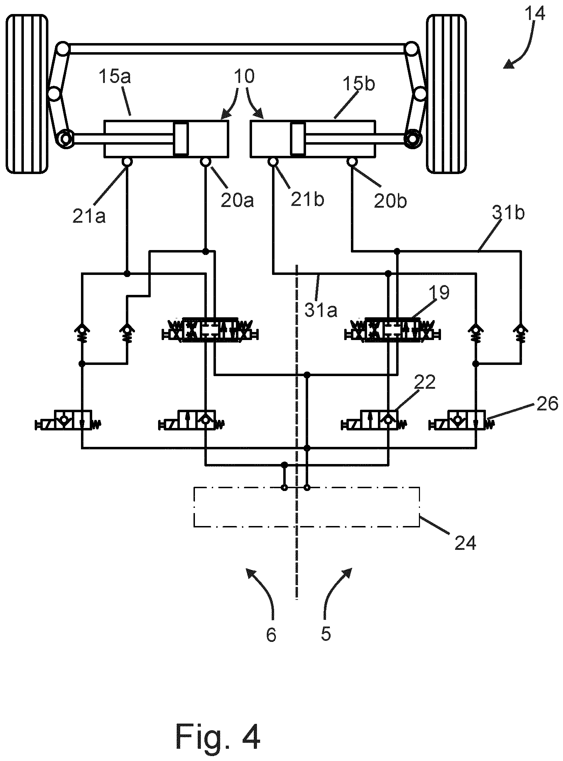

Figur 3 zeigt ein weiteres Ausführungsbeispiel einer Lenkanordnung 2. Die Lenkanordnung 2 umfasst wie das Ausführungsbeispiel in Figur 4 die Lenkachse 14 mit den zwei Rädern 18, welche mittels der Aktorikeinrichtung 10 gesteuert wird. Die Aktorikeinrichtung 10 umfasst auch hier die hydraulischen Zylinder 15a und 15b. Die hydraulischen Zylinder 15a und 5b sind wieder mittels der Eingänge 20a, 20b, 21a, 21b steuerbar und weisen insbesondere eine erste Funktionalität und eine zweite Funktionalität auf. Ferner weist die Lenkanordnung 2 die Versorgungseinrichtung 24 auf, welche zur hydraulischen Versorgung und/oder Druckbereitstellung ausgebildet ist. Von der hydraulischen Versorgung gehen zwei Versorgungswege 28a und 28b aus. Die Versorgungswege 28a und 28b bilden insbesondere parallel geschaltete Versorgungswege ausgehend von der Versorgungseinrichtung 24.

Zwischen der Versorgungseinrichtung 24 und der Aktorikeinrichtung 10 befindet sich eine hydraulische Schaltung, welche der Ansteuerung der ersten und zweiten Funktionalität dient. Dabei ist die hydraulische Schaltung symmetrisch aufgebaut und ist bezüglich einer funktionalen Spiegelachse 29 gleich aufgebaut. Bezüglich der funktionalen Spiegelachse 29 können diese in die erste Steuereinrichtung 5 und die zweite Steuereinrichtung 6 geteilt werden. Nachdem die erste Steuereinrichtung 5 gleichartig zur zweiten Steuereinrichtung 6 ausgebildet ist, und die gleiche Anordnung von Ventilen und/oder pneumatischen oder hydraulischen Bauteilen aufweist, sei hier die Beschreibung auf die erste Steuereinrichtung 5 beschränkt.

Die erste Steuereinrichtung 5 weist Ventil 30 und ein Proportionalventil 19 auf. Das Ventil 30 und das Proportionalventil 19 weisen jeweils zwei Eingänge und zwei Ausgänge auf. Die zwei Eingänge des Ventils 30 sind mit der Versorgungseinrichtung 24 über die beiden Versorgungswege 28a und 28b verbunden. Die beiden Ausgänge des Ventils 30 sind mit den beiden Eingängen des Proportionalventil 19 verbunden. Die beiden Ausgänge des Proportionalventil 19 sind mit der Aktorikeinrichtung 10 verbunden, wobei einer der Ausgänge des Proportionalventil 19 mit den Eingängen 20a und 20b verbunden ist, um so die erste Funktionalität anzusteuern und der andere Ausgang des Proportionalventils 19 mit den Eingängen 21a und 21b verbunden ist, sodass darüber die zweite Funktionalität ansteuerbar ist.

Das Ventil 30 dient als Abschaltelement. Durch Betätigung dieses Ventils 30 kann dieser Zweig, hier ausgebildet als Steuereinrichtung, komplett abgeschaltet oder zugeschaltet werden. Beispielsweise wurde von der Ausfalldiagnoseeinrichtung 13 festgestellt, dass die Funktionalität, die mittels dieser Steuereinrichtung angesteuert wird, die nicht richtig arbeitet, so dass dann dieser Zweig abgeschalten wird und die fehlerhaft angesteuerte Funktionalität nun von der anderen Steuereinrichtung mit übernommen wird. Das Proportionalventil 19 ist als ein 4/3-Proportionalwegeventil ausgebildet. Insbesondere kann das Proportionalventil 19 auch so verstanden werden, dass es die Funktionen der Ventile 26 und 27 aus Figur 2 übernimmt.

Figur 4 zeigt ein weiteres Ausführungsbeispiel einer Lenkanordnung 2. Die Lenkanordnung 2 ist ähnlich aufgebaut zur Lenkanordnung 2 aus Figur 3. Wieder umfasst die Lenkanordnung 2 die Lenkachse 14 mit der Aktorikeinrichtung 10 und den hydraulischen Zylindern 15a und 15b, welche zur Übernahme und/oder Durchführung einer ersten und zweiten Funktionalität, beispielsweise dem Lenken nach links oder nach rechts, ausgebildet sind. Die Ansteuerung der Zylinder 15a, 15b beziehungsweise der einzelnen Funktionalitäten erfolgt über die Eingänge 20a und 21a beziehungsweise 20b und 21b. Ferner weist die Lenkanordnung 2 die Versorgungseinrichtung 24 zur hydraulischen Druckbeaufschlagung auf. Ausgehend von der Versorgungseinrichtung 24 werden wieder zwei Kreise mit Druck und/oder Hydraulik versorgt. Ausgehend von der Versorgungseinrichtung 24 hin zur Aktorikeinrichtung 10 ist eine hydraulische Schaltung angeordnet, welche zwei gleichartig und/oder symmetrisch aufgebaute Steuereinrichtungen 5 und 6 umfassen. Da die Steuereinrichtungen 5 und 6 ähnlich beziehungsweise gleichartig aufgebaut sind, beschränkt sich auch hier die Beschreibung auf die erste Steuereinrichtung 5.

Während bei den Ausgestaltungen der Figuren 2 und 3 die erste Steuereinrichtung 5 sowohl mit dem Zylinder 15a als auch mit dem Zylinder 15b verbunden war und die zweite Steuereinrichtung 6 ebenfalls mit dem Zylinder 15a und 15b verbunden war, ist in diesem Ausführungsbeispiel die erste Steuereinrichtung 5 nur mit dem Zylinder 15b verbunden und die zweite Steuereinrichtung 6 nur mit dem Zylinder 15a verbunden. Die Steuereinrichtung ist so ausgebildet, dass bei Feststellen, dass ein Fehler vorliegt, beispielsweise, dass einer der Zylinder 15a, 15b nicht mehr zur Lenkung beiträgt oder blockiert, diesen blockierenden oder fehlerbehafteten Zylinder durch Abschalten des entsprechenden Zweiges frei und/oder kraftfrei zu schalten.

Hierzu weist die erste Steuereinrichtung 5 zwei Wege 31a und 31b auf. Der Weg 31a erstreckt sich dabei von dem Zylinder 15b und dessen Eingang 21b über ein Proportionalventil 19 und ein 2/2-Wegsperrventil 22 mit der Versorgungseinrichtung 24. In der Verbindung von Eingang 20b mit dem Proportionalventil 19 ist ein weiterer Zweig 31b abgezweigt, welcher über ein 2/2-Wegesperrventil 22 mit der Versorgungseinrichtung 24 verbunden ist.

Ferner ist der Zylinder 15b mittels des Eingangs 21 b in einer hydraulischen Verbindung mit dem Proportionalventil 19 verbunden, wobei weitergehend das Ventil ohne ein weiteres Zwischenventil mit der Versorgungseinrichtung 24 verbunden ist. Zwischen dem Eingang 21b und dem Proportionalventil 19 verzweigt sich die hydraulische Leitung ebenfalls mit der Abzweigung 31a, sodass der Eingang 21b über das 2/2-Wegsperrventil 26 mit der Versorgungseinrichtung 24 verbunden ist. Mittels dem 2/2-Wegsperrventil 26 und den beiden Rückschlagventilen ist es beispielsweise möglich, die hydraulische Ansteuerung des Zylinders 15b kraftfrei zu schalten, da kein weiterer Druckaufbau möglich wäre. Das Freischalten und/oder Kraftfreischalten erfolgt beispielsweise ausgelöst durch die Ausfalldiagnoseeinrichtung 13.

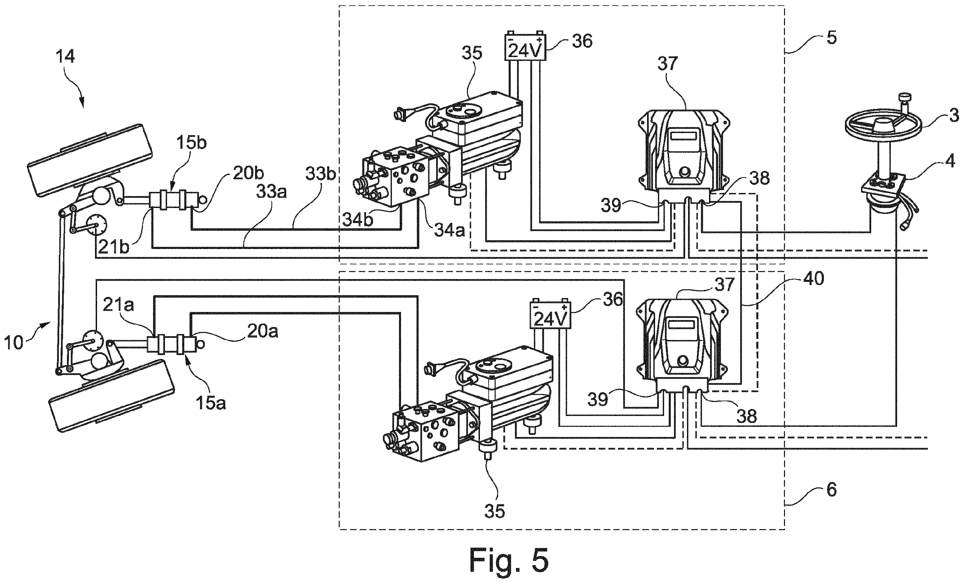

Figur 5 zeigt ein weiteres Ausführungsbeispiel einer Lenkanordnung 2. Die Lenkanordnung 2 ist ähnlich aufgebaut wie Lenkanordnung 2 aus Figur 4. Wieder umfasst die Lenkanordnung 2 die Lenkachse 14 mit der Aktorikeinrichtung 10 und den hydraulischen Zylindern 15a und 15b, welche zur Übernahme und/oder Durchführung einer ersten und zweiten Funktionalität, beispielsweise dem Lenken nach links oder nach rechts, ausgebildet sind. Die Ansteuerung der Zylinder 15a, 15b, beziehungsweise der einzelnen Funktionalitäten erfolgt über die Eingänge 20a und 21a beziehungsweise 20b und 21b. Ferner weist die Lenkanordnung 2 die Versorgungseinrichtung 24 zur hydraulischen Druckbeaufschlagung auf. Ausgehend von der Versorgungseinrichtung 24 ergeben sich zwei hydraulische Kreise. Ausgehend von der Versorgungseinrichtung 24 hin zur Aktorikeinrichtung 10 ist eine hydraulische Schaltung angeordnet, welche zwei gleichartig und/oder symmetrisch aufgebaute Steuereinrichtungen 5 und 6 umfasst. Da die Steuereinrichtungen 5 und 6 ähnlich, beziehungsweise gleichartig, aufgebaut sind, beschränkt sich auch hier die Beschreibung auf die erste Steuereinrichtung 5.

Wie auch bei der Ausführung gemäß Figur 4 ist die erste Steuereinrichtung 5 die erste Steuereinrichtung 5 mit dem Zylinder 15b verbunden und die zweite Steuereinrichtung 6 mit dem Zylinder 15a verbunden. Die Steuereinrichtung 5, 6 ist so ausgebildet, dass bei Feststellen, dass ein Fehler vorliegt, beispielsweise, dass einer der Zylinder 15a, 15b nicht mehr zur Lenkung beiträgt oder blockiert, diesen blockierenden oder fehlerbehafteten Zylinder durch Abschalten des entsprechenden Zweiges frei und/oder kraftfrei zu schalten.

Hierzu weist die erste Steuereinrichtung 5 zwei Wege 33a, 33b auf, wobei die Wege 33a, b als hydraulische Verbindungen ausgebildet sind. Der Weg 33a erstreckt sich dabei von dem Zylinder 15b und dessen Eingang 21b zu einem ersten Ausgang 34a einer Pumpe 35. Der Weg 33b erstreckt sich vom Zylinder 15b und dessen Eingang 20b zu einem zweiten Ausgang 34b der Pumpe 35.

Die Pumpe 35 ist als eine bidirektionale Pumpe ausgebildet und von einem Elektromotor angetrieben. Die Pumpe 35 ist zur Bereitstellung von Druck zum Antrieb der Aktorikeinrichtung 10 bzw. des Zylinders 15b ausgebildet. Hierzu ist der Weg 33a, 33b jeweils ein direkter Weg, insbesondere ohne Drosselventile. Die Lenkgeschwindigkeit und/oder der Lenkwinkel wird beispielsweise durch eine Fördergeschwindigkeit und/oder Fördermenge der Pumpe 35 eingestellt, im Speziellen durch die Drehzahl und/oder Drehrichtung des Elektromotors.

Die Pumpe 35 wird von einer Pumpensteuerung 36 gesteuert, geregelt und/oder mit Energie versorgt. Beispielsweise umfasst die Pumpensteuerung 36 eine Batterie als Energieversorgung. Alternativ kann die Energieversorgung durch Kopplung an eine Strom-/Spannungsversorgung des Bordnetzes erfolgen. Im Falle einer Gleichspannungsversorgung kann ein Drehzahlregler mit Invertierer vorgesehen sein.

Die Steuereinrichtung 5, 6 weist ein Lenkgebermodul 37 auf. Das Lenkgebermodul 37 weist mindestens einen Eingang 38 auf, der mit dem Sensor 4 des Lenkrads 3 verbunden ist zur Übernahme des Eingangsdatums. Das Lenkgebermodul 37 weist mindestens einen Ausgang 39 auf, wobei der Ausgang 39 zur Ansteuerung der Pumpe 35 und/oder der Aktorikeinrichtung 10 mit der Pumpensteuerung 36 verbunden ist. Das Lenkgebermodul 37 ist ausgebildet, basierend auf dem Ausgangsdatum eine Ansteuerung der Pumpe 35 zur Erzielung und Zuordnung des Ausgangsdatums an die Aktorikeinrichtung 10.

Ferner umfasst das Lenkgebermodul 37 eine Ausfalldiagnoseeinrichtung zur Überwachung der von der Aktorikeinrichtung 10, im Speziellen vom Zylinder 15b, ausgeführten Funktionalität, hier z.B. die Lenkung, eine Radstellung und/oder die Stellung des Zylinders 15b. Die Ausfalldiagnoseeinrichtung 13 ist ausgebildet, bei Vorliegen eines Fehlers, also der Falsch- und/oder Nichtausführung der Funktionalität eine Fehlerlösung einzuleiten. Dies kann beispielsweise eine Freischaltung und/oder Abschaltung der Pumpe 35 und/oder ersten Steuereinrichtung 5 umfassen. Die Lenkung würde so durch die weiterhin aktive zweite Steuereinrichtung 6 erfolgen.

Die zweite Steuereinrichtung 6 ist analog zur Steuereinrichtung 5 aufgebaut und umfasst ein Lenkgebermodul 37, eine Pumpensteuerung 36 und eine bidirektionale Pumpe 35 zur hydraulischen Ansteuerung des zweiten Zylinders 15a, insbesondere mit der zweiten Funktonalität. Insbesondere kann zwischen dem Lenkgebermodul 37 der ersten Steuereinrichtung 5 und dem Lenkgebermodul 37 der zweiten Steuereinrichtung 6 eine Verbindung 40 zur Datenübertragung und/oder zum Informationsaustausch vorgesehen sein.

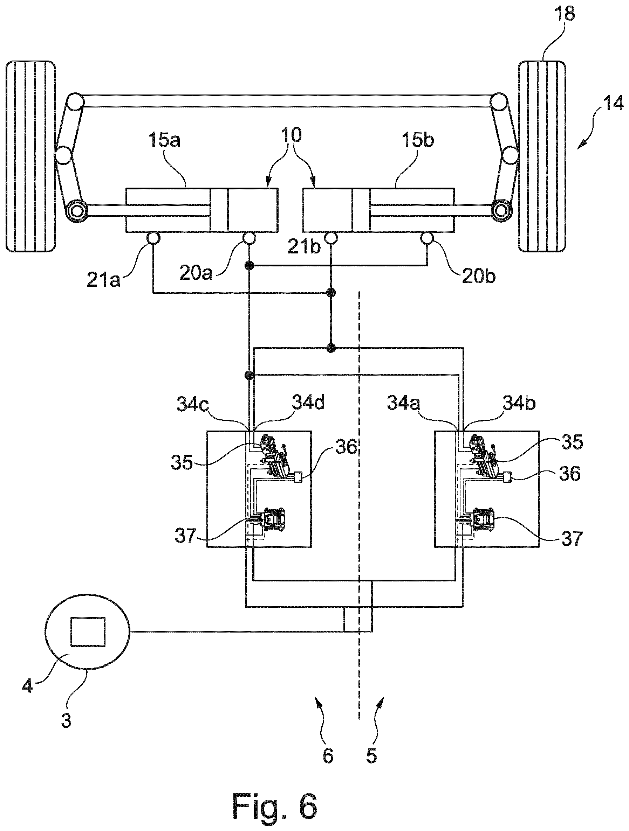

Figur 6 zeigt ein Ausführungsbeispiel, dass die Verwendung von bidirektionalen Pumpen 35 wie aus Figur 5 in einer Ansteuerung von Zylindern 15a, b wie in Figur 3 kombiniert. Hierzu ist das Lenkrad 3 bzw. der Sensor 4 zur Übergabe des Eingangsdatums an die erste und zweite Steuereinrichtung 5, 6 ausgebildet. Sowohl die erste als auch die zweite Steuereinrichtung 5, 6 umfassen eine bidirektionale Pumpe 35, eine Pumpensteuerung 36 und einen Lenkgeber 37 mit Ausfalldiagnoseeinrichtung. Hierbei ist der erste Ausgang 34a der Pumpe 35 der ersten Steuereinrichtung 5 und der zweite Ausgang 34c der Pumpe 35 zweiten Steuereinrichtung 6 mit den Eingängen 20a und 20b der Aktorikeinrichtung 10 ausgebildet, um so eine erste Funktionalität steuern und/oder durchführen zu können. Ferner ist der zweite Ausgang 34b der Pumpe 35 der ersten Steuereinrichtung 5 und der erste Ausgang 34d der Pumpe 35 der zweiten Steuereinrichtung 6 mit den Eingängen 21a und 21b der Aktorikeinrichtung 10 ausgebildet, um so eine zweite Funktionalität steuern und/oder durchführen zu können. Die Ausfalldiagnoseeinrichtung 13 ist ausgebildet, die Durchführung der Funktionalität zu überprüfen, für die die jeweilige Steuereinrichtung 5, 6 die Funktionalität steuert und/oder zugeordnet ist. Bei Feststellen einer Fehldurchführung und/oder eines Fehlers wird eine Fehlerlösung eingeleitet, beispielsweise durch Abschalten der Ansteuerung der gestörten Funktionalität durch die derzeitig zugeordnete Steuereinrichtung.

### Bezugszeichenliste

- 2: Fahrzeug
Lenkanordnung
- 3: Lenkrad
- 4: Sensor
- 5: erste Steuereinrichtung
- 6: zweite Steuereinrichtung
- 7: Eingangsschnittstelle
- 8: Ausgangsschnittstelle
- 9: Lenksteuerung
- 10: Aktorikeinrichtung
- 11: ersten Teilaktor
- 12: zweitem Teilaktor
- 13: Ausfalldiagnoseeinrichtung
- 14: Lenkachse
- 15a,b: hydraulischer Zylinder
- 16: erste Funktionalität
- 17: zweite Funktionalität
- 18: Räder
- 19: Proportionalventil
- 20a,b: Eingänge
- 21a,b: Eingänge
- 24: Versorgungseinrichtung
- 25: Sperrventil
- 26: 2/2-Wegeventil
- 27: Ventil
- 28a,b: Versorgungsweg
- 29: Spiegelachse
- 30: Ventil
- 31a,b: Weg
- 32: Abzweigung
- 33a, b: Weg
- 34a, b: Ausgang
- 35: Pumpe
- 36: Pumpensteuerung
- 37: Lenkgebermodul
- 38: Eingang
- 39: Ausgang
- 40: Verbindung

- HA: Hinterachse
- VA: Vorderachse

## Patentansprüche

1. Lenkanordnung (2) zur Lenkung eines Fahrzeugs, mit einer ersten Steuereinrichtung (5) und einer zweiten Steuereinrichtung (6), wobei die erste Steuereinrichtung (5) eine Eingangsschnittstelle (7) zur Übernahme eines ersten Eingangsdatums des Fahrzeugs und eine Ausgangsschnittstelle (8) zur Ausgabe eines auf dem ersten Eingangsdatum basierenden ersten Ausgangsdatums aufweist,
wobei die zweite Steuereinrichtung (6) eine Eingangsschnittstelle (7) zur Übernahme eines zweiten Eingangsdatums des Fahrzeugs und eine Ausgangsschnittstelle (8) zur Ausgabe eines auf dem zweiten Eingangsdatum basierenden zweiten Ausgangsdatums aufweist,
mit einer Lenkachse (HA), wobei die Lenkachse (HA) mindestens eine Aktorikeinrichtung (10) mit einer ersten Funktionalität (16) und einer zweiten Funktionalität (17) zur Lenkwinkeländerung aufweist,
**dadurch gekennzeichnet, dass**
die erste Steuereinrichtung (5) ausgebildet ist, das erste Ausgangsdatum der ersten oder zweiten Funktionalität (16,17) zuzuordnen,
wobei die zweite Steuereinrichtung (6) ausgebildet ist, das zweite Ausgangsdatum der Funktionalität der beiden Funktionalitäten (16,17) der Aktorikeinrichtung (10) zuzuordnen, der das erste Ausgangsdatum nicht zugeordnet ist, wobei die erste Steuereinrichtung (5) und die zweite Steuereinrichtung (6) jeweils eine Ausfalldiagnoseeinrichtung (13) umfasst, wobei die Ausfalldiagnoseeinrichtung (13) ausgebildet ist, die Funktionalität der zwei Funktionalitäten in der Durchführung zu überwachen, der sie ihr Ausgangsdatum zuordnet, und bei Vorliegen eines Fehlers in der Durchführung, eine Fehlerlösung einzuleiten,
wobei die Ausfallsdiagnoseeinrichtung (13) ausgebildet ist, eine Eigendiagnose der zugehörigen Steuereinrichtung durchzuführen.

2. Lenkanordnung (2) nach Anspruch 1, **dadurch gekennzeichnet, dass** die Ausfalldiagnoseeinrichtung (13) ausgebildet ist, als Fehlerlösung die überwachte und/oder fehlerhafte Funktionalität zu unterdrücken und/oder abzuschalten.

3. Lenkanordnung (2) nach Anspruch 1 oder 2, **dadurch gekennzeichnet, dass** die Ausfalldiagnoseeinrichtung (13) ausgebildet ist, als Fehlerlösung der überwachten und/oder fehlerhaften Funktionalität das andere Ausgangsdatum der beiden Ausgangsdaten zuzuordnen.

4. Lenkanordnung (2) nach einem der vorherigen Ansprüche, **dadurch gekennzeichnet, dass** die erste Funktionalität und die zweite Funktionalität unabhängig und/oder gegenläufig ausgebildet sind.

5. Lenkanordnung (2) nach einem der vorherigen Ansprüche, **dadurch gekennzeichnet, dass** die erste Funktionalität als Lenken in eine Lenkrichtung ausgebildet ist und die zweite Funktionalität als Lenken in eine Gegenrichtung zur Lenkrichtung ausgebildet ist.

6. Lenkanordnung (2) nach einem der Ansprüche 1 bis 4, **dadurch gekennzeichnet, dass** die erste Funktionalität als Lenken ausgebildet ist und die zweite Funktionalität als ein Stand-by-modus ausgebildet ist.

7. Lenkanordnung (2) nach einem der vorherigen Ansprüche, **dadurch gekennzeichnet, dass** die erste Steuereinrichtung (5) und die zweite Steuereinrichtung (6) eine bidirektionale Pumpe zur hydraulischen Ansteuerung der ersten und/oder zweiten Funktionalität aufweist.

8. Lenkanordnung (2) nach Anspruch 7, **gekennzeichnet durch** eine Standlenkungssteuereinheit, wobei der Standlenkungssteuereinheit eine Fahrzeuggeschwindigkeit des Fahrzeugs bereitgestellt ist, wobei die Standlenkungssteuereinheit ausgebildet ist, bei einer Fahrzeuggeschwindigkeit kleiner als eine Mindestbewegungsgeschwindigkeit die bidirektionale Pumpen der ersten und der zweiten Steuereinrichtung (5,6) zur Lenkung und/oder zur Ansteuerung der ersten und zweiten Funktionalität einzusetzen und bei einer Fahrzeuggeschwindigkeit größer als die Mindestbewegungsgeschwindigkeit nur eine der bidirektionalen Pumpen der ersten oder zweiten Steuereinrichtung (5, 6) zur Lenkung und/oder zur Ansteuerung der ersten und zweiten Funktionalität einzusetzen.

9. Lenkanordnung (2) nach einem der vorherigen Ansprüche, **dadurch gekennzeichnet, dass** die Steuereinrichtungen (5, 6) ausgebildet sind, nach einem Neustart des Fahrzeugs, der Steuereinrichtungen (5, 6) und/oder der Lenkanordnung (2) die Zuordnung der Ausgangsdaten zu den Funktionalitäten zu tauschen.

10. Lenkanordnung (2) nach einem der vorherigen Ansprüche, **dadurch gekennzeichnet, dass** die Lenkanordnung (2) eine Steer-by-wire-Anordnung bildet.

11. Lenkanordnung (2) nach einem der vorherigen Ansprüche, **dadurch gekennzeichnet, dass** das erste Eingangsdatum und das zweite Eingangsdatum einen Lenkradeinschlag und/oder einen Lenkwinkel umfasst, wobei die ersten Ausgangsdaten Informationen zur Lenkwinkeländerung nach links und nach rechts umfassen, wobei die zweiten Ausgangsdaten ebenfalls Informationen zur Lenkwinkeländerung nach links und nach rechts umfassen, wobei die erste Funktionalität eine Lenkwinkeländerung nach rechts bildet und die zweite Funktionalität eine Lenkwinkeländerung nach links bildet, wobei die erste Steuereinrichtung (6) ausgebildet ist, der ersten Funktionalität und/oder der Lenkwinkeländerung nach rechts das erste Ausgangsdatum zuzuordnen und die zweite Steuereinrichtung (6) ausgebildet ist, der zweiten Funktonalität und/oder der Lenkwinkeländerung nach links das zweiten Ausgangsdatum zuzuordnen.

12. Lenkanordnung (2) nach einem der Ansprüche 1 bis 10, **dadurch gekennzeichnet, dass** das erste Eingangsdatum und das zweite Eingangsdatum einen Lenkradeinschlag und/oder einen Lenkwinkel umfasst, wobei die ersten Ausgangsdaten Informationen zur Lenkwinkeländerung nach links und nach rechts umfassen, wobei die zweiten Ausgangsdaten ebenfalls Informationen zur Lenkwinkeländerung nach links und nach rechts umfassen, wobei die erste Funktionalität eine Lenkwinkeländerung nach links und nach rechts bildet, wobei die zweite Funktionalität ein Nichtstun bildet, wobei die erste Steuereinrichtung (5) ausgebildet ist, der ersten Funktionalität das erste Ausgangsdatum zuzuordnen und die zweite Steuereinrichtung (6) ausgebildet ist, der zweiten Funktonalität das zweiten Ausgangsdatum zuzuordnen.

13. Fahrzeug **gekennzeichnet durch** mindestens eine Lenkanordnung (2) nach einem der vorherigen Ansprüche.

14. Verfahren zur Lenkung eines Fahrzeugs mittels der Lenkanordnung nach einem der Ansprüche 1 bis 12, wobei mit einer ersten Steuereinrichtung (5) ein Ausgangsdatum basierend auf einem ersten Eingangsdatum bestimmt wird und mit einer zweiten Steuereinrichtung (6) ein zweites Ausgangsdatum basierend auf einem zweiten Eingangsdatum bestimmt wird, wobei eine Lenkachse (HA) basierend auf zwei Funktionalitäten gelenkt wird, wobei einer der Funktionalitäten das erste Ausgangsdatum zugeordnet wird und der anderen der Funktionalitäten das andere Ausgangsdatum zugeordnet wird.

## Claims

1. A steering arrangement (2) for steering a vehicle, having a first control device (5) and a second control device (6),
wherein the first control device (5) has an input interface (7) for receiving a first piece of input data of the vehicle and an output interface (8) for outputting a first piece of output data based on the first piece of input data,
wherein the second control device (6) has an input interface (7) for transferring a second piece of input data of the vehicle and an output interface (8) for outputting a second piece of output data based on the second piece of input data,
having a steering axis (HA), wherein the steering axis (HA) has at least one actuator device (10) with a first functionality (16) and a second functionality (17) for steering angle modification,
**characterized in that**
the first control device (5) is formed to associate the first piece of output data with the first or the second functionality (16,17),
wherein the second control device (6) is formed to associate the second piece of output data with the functionality of the two functionalities (16,17) of the actuator device (10) with which the first piece of output data is not associated,
wherein the first control device (5) and the second control device (6) each comprise a failure diagnosis device (13), wherein the failure diagnosis device (13) is formed to monitor the functionality of the two functionalities during operation with which it associates the piece of output data and, in case of an error in operation, to initiate an error solution,
wherein the failure diagnosis device (13) is formed to perform a self-diagnosis of the associated control device.

2. The steering arrangement (2) according to Claim 1, **characterized in that** the failure diagnosis device (13) is formed to suppress and/or switch off the monitored and/or erroneous functionality as an error solution.

3. The steering arrangement (2) according to Claim 1 or 2, **characterized in that** the failure diagnosis device (13) is formed to associate the other piece of output data of the two pieces of output data with the monitored and/or erroneous functionality as an error solution.

4. The steering arrangement (2) according to any one of the preceding claims, **characterized in that** the first functionality and the second functionality are formed to be independent and/or opposing.

5. The steering arrangement (2) according to any one of the preceding claims, **characterized in that** the first functionality is formed as steering in a steering direction and the second functionality is formed as steering in a direction opposite to the steering direction.

6. The steering arrangement (2) according to any one of Claims 1 to 4, **characterized in that** the first functionality is formed as steering and the second functionality is formed as a stand-by mode.

7. The steering arrangement (2) according to any one of the preceding claims, **characterized in that** the first control device (5) and the second control device (6) have a bidirectional pump for hydraulically driving the first and/or second functionality.

8. The steering arrangement (2) according to Claim 7, **characterized by** a parking steering control unit, wherein the parking steering control unit is provided with a vehicle speed of the vehicle, wherein the parking steering control unit is formed to implement the bidirectional pumps of the first and second control devices (5,6) for steering and/or driving the first and second functionalities at a vehicle speed below a minimal speed of movement and to implement only one of the bidirectional pumps of the first or the second control device (5,6) for steering and/or driving the first and second functionalities at a vehicle speed above a minimal speed of movement.

9. The steering arrangement (2) according to any one of the preceding claims, **characterized in that** the control devices (5, 6) are formed to switch the associations of the pieces of output data with the functionalities after a restart of the vehicle, the control devices (5, 6), and/or the steering arrangement (2).

10. The steering arrangement (2) according to any one of the preceding claims, **characterized in that** the steering arrangement (2) forms a steer-by-wire arrangement.

11. The steering arrangement (2) according to any one of the preceding claims, **characterized in that** the first piece of input data and the second piece of input data comprise a steering wheel lock and/or a steering angle, wherein the first pieces of output data comprise information on steering angle modifications to the left and to the right, wherein the second pieces of output data also comprise information on steering angle modifications to the left and to the right, wherein the first functionality forms a steering angle modification to the right and the second functionality forms a steering angle modification to the left, wherein the first control device (6) is formed to associate the first piece of output data with the first functionality and/or the steering angle modification to the right and the second control device (6) is formed to associate the second piece of output data with the second functionality and/or the steering angle to the left.

12. The steering arrangement (2) according to any one of Claims 1 to 10, **characterized in that** the first piece of input data and the second piece of input data comprise a steering wheel lock and/or a steering angle, wherein the first pieces of output data comprise information on steering angle modification to the left and to the right, wherein the second pieces of output data also comprise information on steering angle modification to the left and to the right, wherein the first functionality forms a steering angle modification to the left and to the right, wherein the second functionality forms inaction, wherein the first control device (5) is formed to associate the first piece of output data with the first functionality and the second control device (6) is formed to associate the second piece of output data with the second functionality.

13. A vehicle, **characterized by** at least one steering arrangement (2) according to any one of the preceding claims.

14. A method for steering a vehicle by means of the steering arrangement according to any one of Claims 1 to 12, wherein, based on a first piece of input data, a piece of output data is determined with a first control device (5) and, based on a second piece of input data, a second piece of output data is determined with a second control device (6), wherein a steering axis (HA) is steered based on two functionalities, wherein the first piece of output data is associated with one of the functionalities and the other piece of output data is associated with the other one of the functionalities.

## Revendications

1. Agencement de direction (2) pour la direction d'un véhicule, avec un premier dispositif de commande (5) et un deuxième dispositif de commande (6),
le premier dispositif de commande (5) présentant une interface d'entrée (7) pour la réception d'une première donnée d'entrée du véhicule et une interface de sortie (8) pour la sortie d'une première donnée de sortie basée sur la première donnée d'entrée,
le deuxième dispositif de commande (6) présentant une interface d'entrée (7) pour la réception d'une deuxième donnée d'entrée du véhicule et une interface de sortie (8) pour la sortie d'une deuxième donnée de sortie basée sur la deuxième donnée d'entrée,
avec un essieu directeur (HA), l'essieu directeur (HA) présentant au moins un dispositif actionneur (10) avec une première fonction (16) et une deuxième fonction (17) pour la modification d'angle de braquage,
**caractérisé en ce que**
le premier dispositif de commande (6) est formé afin d'attribuer la première donnée de sortie à la première ou à la deuxième fonction (16, 17),
le deuxième dispositif de commande (6) étant formé afin d'attribuer la deuxième donnée de sortie à celle des fonctions, parmi les deux fonctions (16, 17) du dispositif actionneur (10), à laquelle la première donnée de sortie n'est pas attribuée,
le premier dispositif de commande (5) et le deuxième dispositif de commande (6) comprenant respectivement un dispositif de diagnostic de panne (13), le dispositif de diagnostic de panne (13) étant formé afin de surveiller, pendant l'exécution, la fonction de celle des deux fonctions à laquelle la donnée de sortie est attribuée, et de lancer une résolution d'erreur en cas d'erreur d'exécution,
le dispositif de diagnostic de panne (13) étant formé afin d'exécuter un autodiagnostic du dispositif de commande correspondant.

2. Agencement de direction (2) selon la revendication 1, **caractérisé en ce que** le dispositif de diagnostic de panne (13) est formé pour supprimer et/ou désactiver la fonction surveillée et/ou défectueuse, pour la résolution d'erreur.

3. Agencement de direction (2) selon la revendication 1 ou 2, **caractérisé en ce que** le dispositif de diagnostic de panne (13) est formé pour attribuer l'autre donnée de sortie parmi les deux données de sortie à la fonction surveillée et/ou défectueuse, pour la résolution d'erreur.

4. Agencement de direction (2) selon l'une quelconque des revendications précédentes, **caractérisé en ce que** la première fonction et la deuxième fonction sont formées de façon indépendante et/ou opposée.

5. Agencement de direction (2) selon l'une quelconque des revendications précédentes, **caractérisé en ce que** la première fonction est formée comme braquage dans une direction de braquage, et **en ce que** la deuxième fonction est formée comme braquage dans une direction opposée à la direction de braquage.

6. Agencement de direction (2) selon l'une des revendications 1 à 4, **caractérisé en ce que** la première fonction est formée comme direction et **en ce que** la deuxième fonction est formée comme un mode veille.

7. Dispositif de commande (2) selon l'une quelconque des revendications précédentes, **caractérisé en ce que** le premier dispositif de commande (5) et le deuxième dispositif de commande (6) présentent une pompe bidirectionnelle pour la commande hydraulique de la première et/ou de la deuxième fonction.

8. Agencement de direction (2) selon la revendication 7, **caractérisé par** une unité de commande de braquage à l'arrêt, une vitesse du véhicule étant mise à disposition de l'unité de commande de braquage à l'arrêt, l'unité de commande de braquage à l'arrêt étant formée afin d'utiliser les pompes bidirectionnelles du premier et du deuxième dispositifs de commande (5, 6) pour le braquage et/ou la commande des première et deuxième fonctions, pour une vitesse de véhicule inférieure à une vitesse de déplacement minimum, et de n'utiliser qu'une des pompes bidirectionnelles du premier ou du deuxième dispositif de commande (5, 6) pour le braquage et/ou la commande des première et deuxième fonctions, pour une vitesse de véhicule supérieure à la vitesse de déplacement minimum,

9. Agencement de direction (2) selon l'une quelconque des revendications précédentes, **caractérisé en ce que** les dispositifs de commande (5, 6) sont formés pour échanger l'attribution des données de sortie aux fonctions après un redémarrage du véhicule, des dispositifs de commande (5, 6) et/ou de l'agencement de direction (2).

10. Agencement de direction (2) selon l'une quelconque des revendications précédentes, **caractérisé en ce que** l'agencement de direction (2) forme un agencement de direction à commande électrique.

11. Agencement de direction (2) selon l'une quelconque des revendications précédentes, **caractérisé en ce que** la première donnée d'entrée et la deuxième donnée d'entrée comprennent un braquage du volant et/ou un angle de braquage, les premières données de sortie comprenant des informations sur la modification d'angle de braquage vers la gauche et vers la droite, les deuxièmes données de sortie comprenant également des informations sur la modification d'angle de braquage vers la gauche et vers la droite, la première fonction formant une modification d'angle de braquage d'angle vers la droite, et la deuxième fonction formant une modification d'angle de braquage vers la gauche, le premier dispositif de commande (6) étant formé afin d'attribuer la première donnée de sortie à la première fonction et/ou à la modification d'angle de braquage vers la droite, et le deuxième dispositif de commande (6) étant formé afin d'attribuer la deuxième donnée de sortie à la deuxième fonction et/ou à la modification d'angle de braquage vers la gauche.

12. Agencement de direction (2) selon l'une des revendications 1 à 10, **caractérisé en ce que** la première donnée d'entrée et la deuxième donnée d'entrée comprennent un braquage du volant et/ou un angle de braquage, les premières données de sortie comprenant des informations sur la modification d'angle de braquage vers la gauche et vers la droite, les deuxièmes données de sortie comprenant également des informations sur la modification d'angle de braquage vers la gauche et vers la droite, la première fonction formant une modification d'angle de braquage d'angle vers la gauche et vers la droite, la deuxième fonction formant une non-action, le premier dispositif de commande (5) étant formé afin d'attribuer la première donnée de sortie à la première fonction, et le deuxième dispositif de commande (6) étant formé afin d'attribuer la deuxième donnée de sortie à la deuxième fonction.

13. Véhicule **caractérisé par** au moins un agencement de direction (2) selon l'une quelconque des revendications précédentes.

14. Procédé pour le braquage d'un véhicule au moyen d'un agencement de direction selon l'une des revendications 1 à 12, une donnée de sortie basée sur une première donnée d'entrée étant déterminée avec un premier dispositif de commande (5), et une deuxième donnée de sortie basée sur une deuxième donnée d'entrée étant déterminée avec un deuxième dispositif de commande (6), un essieu directeur (HA) étant braqué basé sur deux fonctions, la première donnée de sortie étant attribuée à l'une des fonctions et l'autre donnée de sortie étant attribuée à l'autre fonction.
